# EUROPÄISCHE PATENTANMELDUNG

(11) **EP 2 402 731 A1**
(43) Veröffentlichungstag der Anmeldung: **04.01.2012**
(21) Anmeldenummer: 11171485.3
(22) Anmeldetag: 27.06.2011
(51) Int. Cl.: G01M 13/04

(54) **Verfahren zum Training eines Systems zur Klassifikation eines Wälzlagerzustands sowie Verfahren zur Klassifikation eines Wälzlagerzustands und System zur Klassifikation eines Wälzlagerzustands**

(30) Priorität: 01.07.2010 DE 102010025851
(71) Anmelder: Schaeffler Technologies GmbH & Co. KG, 91074 Herzogenaurach (DE)
(72) Erfinder: Wellhausen, Dr. Jens, 52072 Aachen (DE)

(57) **Zusammenfassung**

Die Erfindung betrifft ein Verfahren zum Training eines Systems zur Klassifikation eines Wälzlagerzustands sowie ein Verfahren und ein System zur Klassifikation eines Wälzlagerzustands.

Erfindungsgemäß wird während eines Betriebszustands eines Wälzlagers ein Körperschallzustandssignal des Wälzlagers gemessen. Unter Verwendung des gemessenen Körperschallzustandssignals werden Zustandsmerkmale, welche den Betriebszustand des Wälzlagers beschreiben, bestimmt. Unter Verwendung der Zustandsmerkmale und einer trainierbaren bzw. trainierten Abbildungsvorschrift, welche ein Zustandsverhalten eines Wälzlagers beschreibt, wird der Betriebszustand des Wälzlagers klassifiziert.

Für das Training der trainierbaren Abbildungsvorschrift werden unter Verwendung einer Abbildungsmodellvorschrift, welche ein Zustandsverhalten eines Wälzlagers, insbesondere eines geschädigten Wälzlagers, beschreibt (Schadensmodell), für vorgebbare geschädigte Zustände des Wälzlagers, Körperschallmodellsignale und daraus die Zustandsmerkmale ermittelt (Merkmalsextraktion). Unter Verwendung der Zustandsmerkmale und der vorgebbaren geschädigten Zustände wird die trainierbare Abbildungsvorschrift trainiert.

## Beschreibung

### Gebiet der Erfindung

Die Erfindung betrifft eine Klassifikation eines Wälzlagerzustands. Insbesondere betrifft die Erfindung eine Erkennung bzw. Detektion eines Wälzlagerschadens unter Verwendung einer Signalklassifikation eines Körperschallsignals.

Wälzlager, insbesondere zur Lagerung von Wellen in komplexen Anlagen, wie Produktionsmaschinen, sind Bauteile, deren verschleißbedingter Ausfall einerseits zu hohen Kosten bzw. zu großen Schäden an solchen Anlagen und andererseits zu einer verschlechterten Qualität von produzierten Gütern führt.

Eine frühzeitige Erkennung bzw. Detektion eines Schadens an einem Wälzlagen, insbesondere die Erkennung eines Schadensortes (Schadenstyp) und/oder einer Schadensschwere (Schadensentwicklung), kann einen rechtzeitigen und notwendigen Austausch dieses Wälzlagers bzw. des geschädigten Wälzlagerteils ermöglichen. Dadurch können hohe Kosten bzw. große Schäden an den komplexen Anlagen verhindert bzw. eine konstante Qualität der produzierten Güter gewährleistet werden.

Mechanische Fehler bzw. Schäden an Wälzlagern, wie Risse, Reibstellen oder Ausbrüche (Pittings), erzeugen - bei Überrollung einer solchen Schadensstelle - typische Signaturen in einem Körperschallsignal des jeweiligen Teils. Charakteristisch für solche Fälle sind beispielsweise periodische, drehzahlsynchrone Anteile im Signalverlauf. Durch eine Analyse von Körperschallsignalen, beispielsweise in einer Zeit- und/oder Frequenzebene, können solche typischen (Schadens-)Signaturen und damit mechanische Schäden an Wälzlagern erkannt bzw. diagnostiziert werden.

Aus der VDI-Richtlinie VDI 3832 ist eine Wälzlagerdiagnose mittels Körperschallanalyse bekannt. Die VDI-Richtlinie VDI 3832 schlägt vor, ein Körperschallsignal am zu analysierenden Wälzlager zu messen, das gemessene Körperschallsignal in der Zeitebene bzw. in einem Zeitbereich (Effektivwert, Betragsmaximalwert, Hüllkurve, Kurtosisfaktor, Scheitelfaktor) oder in der Frequenzebene bzw. in einem Frequenzbereich (Breitbandspektrum, Hüllkurvenspektrum, Schmalbandspektrum/frequenzselektive Kennwerte) auszuwerten und dadurch Schädigungen am Wälzlager zu erkennen.

Nachteilig an diesen bekannten Verfahren zur Wälzlagerdiagnose mittels Körperschallanalyse ist, dass eine zuverlässige Zustandserkennung einerseits von einer geeigneten Auswahl des Analyseverfahrens bzw. eines geeigneten Kennwerts sowie andererseits von einer sachkundigen Interpretation des Analyseergebnisses bzw. des Kennwertes abhängt. Dieser erfordert in der Regel umfangreiches Expertenwissen über ein (Zustands-)Verhalten von Wälzlagern (im un- bzw. geschädigten Zustand) und über Wälzlagerschäden sowie eine Betrachtung einer Historie eines Wälzlagerschadensverlaufs. Ferner sind derartige Verfahren nicht voll automatisierbar bzw. automatisiert einsetzbar.

Weiterhin erweist sich bei solchen bekannten Verfahren von Nachteil, dass solche Verfahren meist keine bzw. keine zuverlässigen Aussagen über eine Schadensschwere und/oder einen Schadensverlauf eines Wälzlagerschadens generieren. Hierzu ist dann meist ein weiterführender Vergleich mit älteren Messdaten in Form einer Trendanalyse notwendig.

Aus anderen Bereichen einer Signalverarbeitung bzw. Signalanalyse, wie eine Verarbeitung eines Sprachsignals bzw. einer Spracherkennung oder einer Bildverarbeitung bzw. Bilderkennung, sind dort zum Einsatz kommende Klassifikationsalgorithmen bekannt, mit welchen (System-)Zustände klassifiziert bzw. analysiert und erkannt werden können.

Solche Algorithmen zur Klassifikation, wie beispielsweise Neuronale Netze, k-nächste Nachbarn, Bayes-Entscheider, müssen in der Regel zunächst anhand vorgegebener Systemzustände trainiert werden, um in einer Anwendungsphase Zustände, insbesondere Schadenszustände, zuverlässig klassifizieren bzw. erkennen zu können. Dazu ist eine genügend große Menge von Trainingsdaten - insbesondere von später zuverlässig zu klassifizierenden Systemzuständen, wie Schadenzuständen (Schadensmuster), - notwendig, um ein ausreichendes Training für eine spätere zuverlässige Klassifikation zu gewährleisten.

Problematisch hierbei ist das Vorhandensein einer ausreichenden Anzahl solcher geeigneter Trainingsdaten - insbesondere mit Schadensmustern.

Vor diesem Hintergrund besteht die Aufgabe der vorliegenden Erfindung darin, ein Verfahren bzw. ein System anzugeben, mit welchem Wälzlagerschäden zuverlässig analysiert, frühzeitig erkannt bzw. detektiert werden können. Insbesondere soll es mit einem solchen Verfahren bzw. einem solchen System möglich sein, einen Schadenstyp und/oder eine Schadensschwere eines Wälzlagers zuverlässig zu detektieren bzw. diagnostizieren. Darüber hinaus soll ein solches Verfahren bzw. ein solches System einfach und kostengünstig realisierbar sowie automatisiert einsetzbar sein.

Diese Aufgabe wird erfindungsgemäß gelöst durch ein Verfahren zum Training eines Systems zur Klassifikation eines Wälzlagerzustands sowie durch ein Verfahren und ein System zur Klassifikation eines Wälzlagerzustands gemäß dem jeweiligen unabhängigen Patentanspruch.

Bei dem Verfahren zum Training eines Systems zur Klassifikation eines Wälzlagerzustands werden unter Verwendung einer Abbildungsmodellvorschrift, welche ein Zustandsverhalten eines Wälzlagers, insbesondere eines geschädigten Wälzlagers, beschreibt, für vorgebbare geschädigte Zustände des Wälzlagers, Körperschallmodellsignale ermittelt (Signaldatenbank).

Unter Verwendung der ermittelten Körperschallmodellsignale des Wälzlagers werden Zustandsmerkmale, welche die vorgebbaren geschädigten Zustände des Wälzlagers beschreiben, bestimmt (Merkmalsextraktion). Unter Verwendung der Zustandsmerkmale, welche die vorgebbaren geschädigten Zustände des Wälzlagers beschreiben, und der vorgebbaren geschädigten Zustände wird ein System zur Klassifikation eines Wälzlagerzustands, insbesondere eine trainierbare Abbildungsvorschrift, welche ein Zustandsverhalten eines Wälzlagers beschreibt und welche innerhalb dieses Systems zur Klassifikation eines Wälzlagerzustands - als Klassifikator - verwendet wird, trainiert (Klassifikator -Training).

Anschaulich stellt dieser Aspekt der Erfindung ein Trainingsverfahren dar, welches für einen weiteren Aspekt der Erfindung, das Verfahren bzw. das System zur Klassifikation eines Wälzlagerzustands, insbesondere zum Training einer dort verwendeten trainierbaren bzw. dann trainierten Abbildungs- vorschrift, eingesetzt werden kann.

Besonders vorteilhaft ist bei diesem Aspekt der Erfindung, dass hier auf einfache Weise geeignete und in ihrer Anzahl ausreichende Trainingsdaten für das Training der im Rahmen der Klassifikation von Wälzlagerzuständen verwendeten, trainierbaren bzw. trainierten Abbildungsvorschrift generiert werden können. Unter Verwendung der Abbildungsmodellvorschrift, welche das Zustandsverhalten eines Wälzlagers, insbesondere eines geschädigten Wälzlagers, beschreibt (Schadensmodell), kann mit geringem Aufwand eine ausreichend große Trainingsdatenbank von Signalen mit Mustern von unterschiedlichen Schadenszuständen (Schadenstyp, Schadensgröße bzw. Schadensschwere) - synthetisch - erzeugt werden (Signaldatenbank).

Bei einem Verfahren zur Klassifikation eines Wälzlagerzustands wird während eines Betriebszustands eines Wälzlagers ein Körperschallzustandssignal des Wälzlagers gemessen (Körperschallsignal - Messung).

Unter Verwendung des gemessenen Körperschallzustandssignals des Wälzlagers werden Zustandsmerkmale, welche den Betriebszustand des Wälzlagers beschreiben, bestimmt (Merkmalsextraktion).

Unter Verwendung der Zustandsmerkmale und einer trainierten Abbildungsvorschrift, welche ein Zustandsverhalten eines Wälzlagers beschreibt, wird der Betriebszustand des Wälzlagers klassifiziert (Klassifikator).

Ein System zur Klassifikation eines Wälzlagerzustands weist einen Aufnehmer zur Aufnahme eines Körperschallzustandssignals eines Wälzlagers und eine Einrichtung zur Auswertung des aufgenommenen Körperschallzustandssignals des Wälzlagers auf.

Der Aufnehmer zur Aufnahme des Körperschallzustandssignals ist derart eingerichtet, dass während eines Betriebszustands des Wälzlagers das Körperschallzustandssignal des Wälzlagers aufnehmbar ist (Körperschallsignal - Messung).

Dazu kann ein solcher Aufnehmer zur Aufnahme des Körperschallzustandssignals, beispielsweise ein Körperschallsensor oder ein Schwingungssensor, (unmittelbar) am Wälzlager oder mittelbar an einem Bauteil, welches eine schalltechnische Kopplung mit dem Wälzlager aufweist, beispielsweise ein Maschinengehäuse des Wälzlagers, angeordnet sein.

Die Einrichtung zur Auswertung des aufgenommenen Körperschallzustandssignals des Wälzlagers ist derart eingerichtet, dass unter Verwendung des aufgenommenen Körperschallzustandssignals des Wälzlagers Zustandsmerkmale, welche den Betriebszustand des Wälzlagers beschreiben, bestimmbar sind (Merkmalsextraktion).

Weiter ist die Einrichtung zur Auswertung des aufgenommenen Körperschallzustandssignals des Wälzlagers derart eingerichtet, dass unter Verwendung der Zustandsmerkmale und einer trainierten Abbildungsvorschrift, welche ein Zustandsverhalten eines Wälzlagers beschreibt, der Betriebszustand des Wälzlagers klassifizierbar ist (Klassifikator).

Dabei kann eine Klassifikation des Betriebszustands nach einer Schadensart/einem Schadenstyp, wie beispielsweise einem Außenring-, einem Innenring- und/oder einem Wälzkörperschaden bzw. keinem Lagerschaden (unbeschädigtes Wälzlager), und/oder einer Schadensschwere/einer Schadensentwicklung, wie beispeisweise einem leichten Lagerpitting, einem schweren Lagerschaden - oder Schadensschweren zwischen den beiden genannten Schadensschweren - , erfolgen. Die Klassifikation kann dabei semantisch und/oder (numerisch) skaliert realisiert sein. Darüber hinaus kann der Klassifikator auch eine Aussage über eine Wahrscheinlichkeit der bzw. einer Klassifikation des Betriebszustandes - im Sinne einer Ergebnisgüte - liefern.

Aus dieser Klassifikation bzw. aus einem derart klassifizierten (Betriebs)Zustand des eines Wälzlagers lässt sich nun automatisiert - und an einen Benutzer übermittelbar/einem Benutzer anzeigbar - ein Wälzlagerzustand, insbesondere ein Wälzlagerschadenszustand, diagnostizieren. D.h., die Klassifikation liefert unmittelbar die Diagnose eines Wälzlagerzustands (Ergebnis/Aussage).

Beispielsweise kann so einem Benutzer der diagnostizierte Wälzlagerzustand als semantischer Schadenstyp, z.B. "Innenringschaden", und/oder als skalierte Schadensschwere, z.B. "Schadensschwere Stufe 3" (beispielsweise aus einer Skala mit Schadensschwerestufen 1 bis 10), angezeigt werden.

Die Einrichtung zur Auswertung des aufgenommenen Körperschallzustandssignals des Wälzlagers kann als Computer mit entsprechender Auswertesoftware, beispielsweise in Form einer hardware-nahen Programmierung oder auch in Form einer Programmierung in Hoch- oder Scriptsprache, realisiert sein.

Eine Übertragung der von dem Aufnehmer aufgenommenen Körperschallsignale zur Einrichtung zur Auswertung der aufgenommenen Körperschallzustandssignal kann über eine Datenleitung, beispielsweise über ein Datenkabel oder über eine (kabellose) Funkschnittstelle, erfolgen.

Vorteilhafte Weiterbildungen der Erfindung ergeben sich aus den abhängigen Ansprüchen.

Bevorzugt lässt sich als die trainierbare - und dann erfindungsgemäß trainierte - Abbildungsvorschrift eine Data-Mining-Methode einsetzten. Solche Data-Mining-Methoden, wie auch deren Trainingsverfahren, sind im Allgemeinen bekannt und werden im Bereich von Datenanalysen komplexer Zustandsräume eingesetzt. Eine solche erfindungsgemäß einsetzbare Data-Mining-Methode kann beispielsweise ein statistisches Verfahren, ein Entscheidungsbaum, ein Regressionsbaum, Assoziationsregeln, ein neuronales Netz, ein Neuro-Fuzzy-System, eine Fuzzy-Datenanalyse, ein Lernen probabilistischer Netze, k-nächster Nachbar, ein Hidden-Markov und/oder ein Bayes-Entscheider sein (trainierbarer Klassifikator).

Weiterhin bevorzugt ist die Abbildungsmodellvorschrift, welche das Zustandsverhalten eines Wälzlagers, insbesondere eines geschädigten Wälzlagers, beschreibt, ein Wälzlagerschadensmodell. Dieses kann derart ausgebildet sein, dass für vorgebbare, insbesondere geschädigte, Zustände des Wälzlagers die Körperschallmodellsignale generierbar sind.

Dabei kann als Wälzlagerschadensmodell als analytisches Modell bzw. mathematisches Modell (Abbildungsvorschrift) realisiert sein, welches die vorgebbaren, insbesondere geschädigten, Zustände des Wälzlagers auf Körperschallmodellsignale abbildet, d.h. für die vorgebbaren, insbesondere geschädigten, Zustände des Wälzlagers werden unter Verwendung des Wälzlagerschadensmodell jeweilige Körperschallmodellsignalverläufe ermittelt.

Weiterhin kann bevorzugt vorgesehen sein, dass die vorgebbaren, insbesondere geschädigten, Zustände des Wälzlagers entsprechend den zu klassifizierenden Betriebszuständen festgelegt bzw. vorgegeben sind. So können die vorgebbaren, insbesondere geschädigten, Zustände des Wälzlagers (auch Klassifizierung nach dem Klassifikator) nach Schadensart/Schadenstyp, wie beispielsweise "kein Wälzlagerschaden", ein "Außenring-" ein "Innenring-" und/oder ein "Wälzkörperschaden", und/oder Schadensschwere/ Schadensentwicklung, wie beispeisweise ein "leichtes Lagerpitting", ein "schwerer Lagerschaden" - oder Schadensschweren zwischen den beiden genannten Schadensschweren - , unterschieden und vorgegeben sein.

Die Festlegung der vorgebbaren, insbesondere geschädigten, Zustände kann - entsprechend der Klassifikation der Betriebszustände - dabei semantisch und/oder (numerisch) skaliert realisiert sein.

Für diese vorgebbaren, insbesondere geschädigten, Zustände können unter Verwendung des Wälzlagerschadensmodells entsprechende (synthetische) Körperschallsignalverläufe - und dadurch in einfacher Weise eine synthetische und ausreichend große Trainingsdatenbasis - generiert werden. Diese - in jeweiliger Verknüpfung mit den entsprechenden vorgebbaren, insbesondere geschädigten, Zuständen - werden bevorzugt in einer Datenbank (Schadensdatenbank, Signaldatenbank)) gespeichert.

Unter Verwendung dieser Körperschallmodellsignale des Wälzlagers werden nun die Zustandsmerkmale bestimmt, wobei als Zustandsmerkmale bevorzugt Kennwerte in einem Zeitbereich, insbesondere ein Effektivwert, ein Betragsmaximalwert, eine Hüllkurve, eine Signalleistung, ein Kurtosisfaktor und/oder ein Scheitelfaktor, und/oder Kennwerte in einem Frequenzbereich, insbesondere ein Breitbandspektrum, ein Hüllkurvenspektrum, ein Schmalbandspektrum, frequenzselektive und/oder bauteilspezifische Kennwerte, verwendbar bzw. einsetzbar sind (Merkmalsextraktion).

Zweckmäßiger Weise kann vorgesehen werden, dass diese Kennwerte, welche hier im Rahmen des Trainingsverfahrens bzw. der Körperschallmodellsignale und dortiger Merkmalsextraktion verwendet werden, auch diejenigen sind, welche im erfindungsgemäßen Klassifikationsverfahren, d.h. bei den gemessenen Körperschallzustandssignalen - und der dortigen Merkmalsextraktion (in der Anwendungsphase), eingesetzt werden.

Ein wesentlicher Vorteil der Erfindung besteht darin, dass in einfacher Weise eine automatisierte bzw. automatische Signalanalyse bzw. Signalklassifikation von Körperschallsignalen in der Wälzlagerdiagnose zur Erkennung von Schadensarten und Schadensfortschritten realisiert werden kann. Insbesondere ermöglicht die Erfindung automatisiert bzw. automatisch eine Aussage über eine Schadensart und - was besonders praxisrelevant ist - eine Aussage über eine Schadensschwere eines Wälzlagerschadens, insbesondere auch ohne Betrachtung einer Historie.

Ein weiterer besonders großer Vorteil, der durch die Erfindung erreicht wird, ergibt sich aus in der Generierung und Nutzung synthetischer Daten zum Training des Klassifikators. Unter Verwendung des Wälzlagerschadensmodells kann eine - für ein ausreichendes Training als Voraussetzung für eine zuverlässige Klassifikation - ausreichend große (Trainings-)Datenmenge generiert werden. Insbesondere bei einem Parameter Schadensgröße bzw. bei der Diagnose/Schätzung der Schadensgröße kann die notwendige Datenmenge (Trainingsdatenbank) in der Praxis auf andere Weise nicht erzeugt werden.

Weiterhin ist bei der Erfindung besonders vorteilhaft, dass - gegenüber bekannten Verfahren - hier zuverlässige Aussagen über eine Schadensschwere und/oder einen Schadensverlauf eines Wälzlagerschadens generiert werden können. Auch - als weiterer besonderer Vorteil der Erfindung - im Unterschied zu bekannten Verfahren ist bei der Erfindung kein weiterführender Vergleich mit älteren Messdaten in Form einer Trendanalyse notwendig.

Ausführungsbeispiele der Erfindung werden nachfolgend anhand von Figuren beschrieben. Dabei zeigen:
- Figur 1: Verfahrensschritte für Verfahren zum Training eines System zur Klassifikation eines Wälzlagerzustands gemäß einem Ausführungsbeispiel der Erfindung;
- Figur 2: Verfahrensschritte für ein Verfahren zur Klassifikation eines Wälzlagerzustands gemäß einem Ausführungsbeispiel der Erfindung;
- Figur 3: eine Skizze eines System zur Klassifikation eines Wälzlagerzustands gemäß einem Ausführungsbeispiel der Erfindung.

### Ausführliche Beschreibung der Zeichnungen

### Ausführungsbeispiel Wälzlager - Diagnose-/Klassifikationssystem

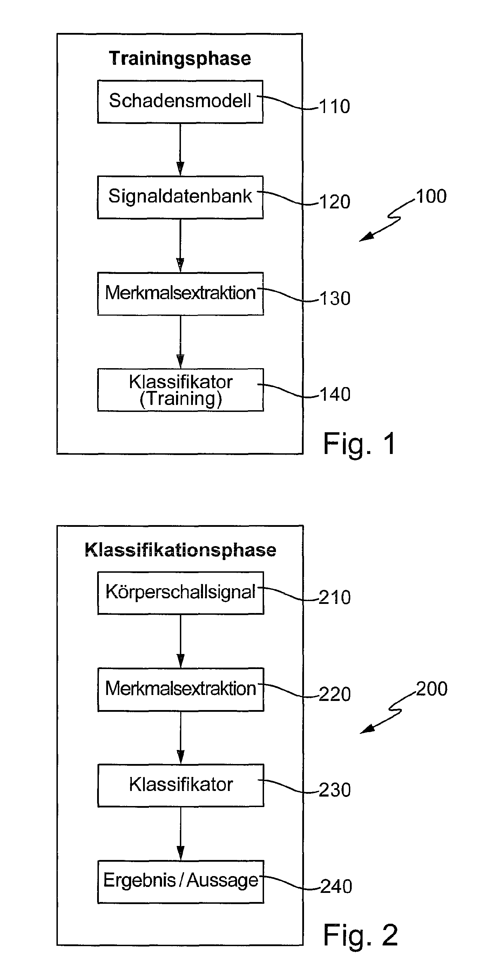

Figuren 1 bis 3 zeigen ein System zur Erkennung und Bewertung von Wälzlagerschäden, kurz Wälzlager-Diagnose/Klassifikationssystem 1.

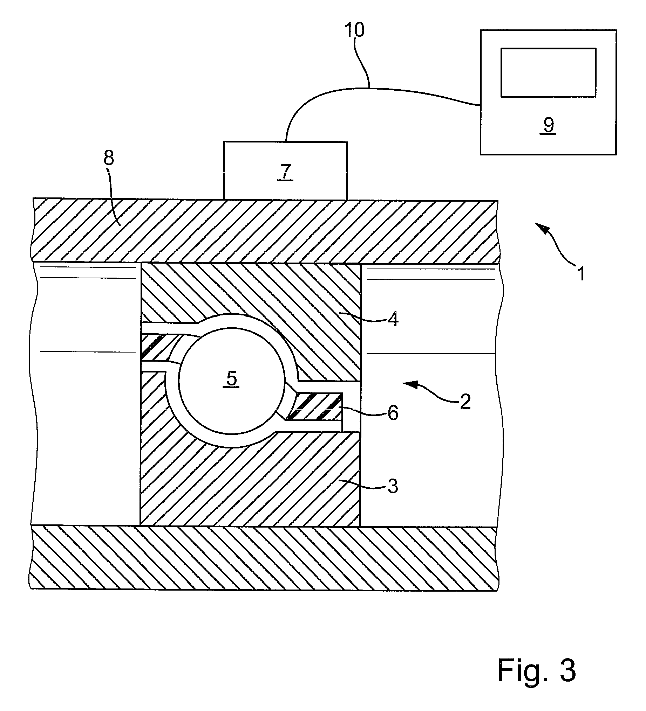

Figur 3 zeigt dabei den grundsätzlichen, hardware-technischen Aufbau dieses Wälzlager-Diagnose/Klassifikationssystems 1.

An einem Gehäuse 8 einer zu überwachenden Wälzlageranordnung 2 ist - in schalltechnischer Kopplung mit dem zu überwachenden Wälzlager 2 - ein Körperschallsensor 7 angeordnet. Die Wälzlageranordnung 2, hier als Schrägkugellager 2, weist die üblichen Komponenten Innenring 3, Außenring 4, Wälzkörper 5 und Käfig 6 auf.

Der Körperschallsensor 7 ist über eine Datenleitung bzw. Datenkabel 10 mit einer Auswerteeinheit bzw. Computer - neben dem Körperschallsensor die weitere wesentliche Komponente des Wälzlager-Diagnose / Klassifikationssystems 1 - verbunden 9.

Dieser Computer 9 weist Software auf, mit welcher die Erkennung und Bewertung von Wälzlagerschäden (Wälzlager-Diagnose / Klassifikation) durchführbar ist. Diese Software ist in Form einer hardware-nahen Programmierung oder in Form einer Programmierung in Hoch- oder Scriptsprache realisiert.

### Training des Wälzlager-Diagnose/ Klassifikationssystems 1 (100)

Geeignete Algorithmen zur Klassifikation in der Messtechnik, wie auch bei dem hier beschriebenen Wälzlager-Diagnose / Klassifikationssystem 1, müssen zunächst trainiert werden, wozu Trainingsdaten von bekannten Zuständen notwendig sind.

Im Bereich der Maschinendiagnose, im Speziellen im Bereich der Wälzlagerdiagnose, stellt es in der Praxis oft ein Problem dar, auf eine ausreichende Anzahl von geeigneten Trainingsdaten mit Schadensmustern zuzugreifen.

Daher werden in dem hier beschriebenen Wälzlager-Diagnose/Klassifikationssystem 1 Signale für den Aufbau einer Schadenssignaldatenbank (120) genutzt, die synthetisch mit Hilfe eines Schadensmodells (110) erzeugt werden (110, 120).

Dieses Schadensmodell (110) ist parametrierbar, so dass unterschiedliche Schadenstypen (Innenring-, Außenring oder Wälzkörperschaden bzw. kein Wälzlagerschaden) simuliert werden können. Ein weiterer Parameter ist die Schadensgröße vom beginnenden Pitting bis hin zum großflächigen Schaden.

Mit Hilfe dieses Schadensmodells (110) kann mit wenig Aufwand eine große Trainingsdatenbank (120) von Signalen mit Mustern von unterschiedlichen Schadenstypen und Schadensgrößen erzeugt werden.

Aus den Signalen der synthetisch erzeugten Schadensdatenbank werden Merkmale im Zeit- und Frequenzbereich extrahiert (130). Dabei handelt es sich um Kennwerte, wie Signalleistung und Scheitelfaktor im Zeitbereich und bauteilspezifische Kennwerte im Frequenzbereich.

Mit dem so entstandenen Merkmalsraum wird der Klassifikationsalgorithmus für die folgende Klassifikationsaufgabe trainiert (140). Als Klassifikationsalgorithmen wird ein neuronales Netz eingesetzt.

### Anwendung/Anwendungsphase bzw. Klassifikation mittels des Wälzlager-Diagnose/ Klassifikationssystems 1 (200)

Zur Klassifikation (200) eines real gemessenen, unbekannten Zustandes eines Körperschallsignals des Wälzlagers werden nun zunächst Körperschallsignale am Wälzlager gemessen (210) und dann ebenfalls die genannten Merkmale extrahiert (220).

Der Klassifikationsalgorithmus bzw. das (trainierte) neuronale Netz ordnet nun diese Merkmale in der Trainingsmenge ein und vergleicht so das gemessene Körperschallsignal mit den in der Schadensdatenbank vorhandenen Signalen (230).

Auf diese Weise, d.h. durch diese Klassifikation mittels des neuronalen Netzes, wird eine Aussage über Zustandes des gemessenen Wälzlagers gewonnen (240). Diese Aussage gibt dabei die Parameter "Schadenstyp" (Innenring-, Außenring oder Wälzkörperschaden bzw. kein Wälzlagerschaden) und "Schadensgröße" (vom beginnenden Pitting bis hin zum großflächigen Schaden) als Ergebnis der Klassifikation in semantischer Form, z.B. "Innenringschaden", und numerischer Form, z.B. "Schadensgröße Stufe 4", wieder. Darüber hinaus liefert der Klassifikator eine Aussage über die Wahrscheinlichkeit seiner Prognose, d.h. eine Aussage hinsichtlich der Ergebnisgüte (240).

Ein besonders großer Vorteil des hier beschriebenen WälzlagerDiagnose/Klassifikationssystems liegt in der Nutzung synthetischer Daten zum Training eines Klassifikators. Insbesondere bei dem Parameter Schadensgröße bzw. bei der Schätzung der Schadensgröße kann eine für ein ausreichendes Training - als Voraussetzung für eine zuverlässige Diagnose in der Anwendungsphase - notwendige Datenmenge (Trainingsdatenbank) in der Praxis auf andere Weise nicht erzeugt werden.

### Bezugszeichen

- 1: Wälzlager - Diagnose-/Klassifikationssystem
- 2: Wälzlageranordnung
- 3: Innenring
- 4: Außenring
- 5: Wälzkörper
- 6: Käfig
- 7: Körperschallsensor
- 8: Gehäuse
- 9: Einrichtung zur Auswertung des aufgenommenen Körperschallzustandssignals des Wälzlagers
- 10: Datenleitung
- 100: Verfahren zum Training eines Wälzlager - Diagnose-/Klassifikationssystems
- 110, 120, 130, 140: Verfahrensschritte bei einem Wälzlager - Diagnose-/Klassifikationssystem
- 200: Verfahren zur Diagnose/Klassifikation eines Wälzlagerzustands
- 210, 220, 230, 240: Verfahrensschritte bei einem Verfahren zur Wälzlagerdiagnose/Wälzlagerklassifikation

## Patentansprüche

1. Verfahren zum Training eines System zur Klassifikation eines Wälzlagerzustands, bei dem
- unter Verwendung einer Abbildungsmodellvorschrift, welche ein Zustandsverhalten eines Wälzlagers, insbesondere eines geschädigten Wälzlagers, beschreibt, für vorgebbare geschädigte Zustände des Wälzlagers, Körperschallmodellsignale ermittelt werden
- unter Verwendung der ermittelten Körperschallmodellsignale des Wälzlagers Zustandsmerkmale, welche die vorgebbaren geschädigten Zustände des Wälzlagers beschreiben, bestimmt werden,
- unter Verwendung der Zustandsmerkmale, welche die vorgebbaren geschädigten Zustände des Wälzlagers beschreiben, und der vorgebbaren geschädigten Zustände ein System zur Klassifikation eines Wälzlagerzustands, insbesondere eine trainierbare Abbildungsvorschrift, welche ein Zustandsverhalten eines Wälzlagers beschreibt, trainiert wird.

2. Verfahren zum Training eines System zur Klassifikation eines Wälzlagerzustands nach mindestens einem der voranstehenden Ansprüche, **dadurch gekennzeichnet, dass** die trainierbare Abbildungsvorschrift eine Data-Mining-Methode, insbesondere ein statistisches Verfahren, ein Entscheidungsbaum, ein Regressionsbaum, Assoziationsregeln, ein neuronales Netz, ein Neuro-Fuzzy-System, eine Fuzzy-Datenanalyse, ein Lernen probabilistischer Netze und/oder ein Bayes-Entscheider, ist.

3. Verfahren zum Training eines Systems zur Klassifikation eines Wälzlagerzustands nach mindestens einem der voranstehenden Ansprüche, **dadurch gekennzeichnet, dass** die Abbildungsmodellvorschrift ein Wälzlagerschadensmodell ist.

4. Verfahren zum Training eines Systems zur Klassifikation eines Wälzlagerzustands nach mindestens einem der voranstehenden Ansprüche, **dadurch gekennzeichnet, dass** die vorgebbaren geschädigten Zustände des Wälzlagers ein Schadenstyp eines Wälzlagers, insbesondere ein Innenring-, Außenring- oder Wälzkörperschaden, und/oder eine Schadensgröße eines Wälzlagers, insbesondere ein beginnendes Lagerpitting oder ein großflächiger Lagerschaden oder eine Schadensgröße zwischen dem beginnenden Lagerpitting und dem großflächigen Lagerschaden, sind bzw. ist.

5. Verfahren zum Training eines Systems zur Klassifikation eines Wälzlagerzustands nach mindestens einem der voranstehenden Ansprüche, **dadurch gekennzeichnet, dass** die Zustandsmerkmale Kennwerte in einem Zeitbereich, insbesondere ein Effektivwert, ein Betragsmaximalwert, eine Hüllkurve, eine Signalleistung, ein Kurtosisfaktor und/oder ein Scheitelfaktor, und/oder in einem Frequenzbereich, insbesondere ein Breitbandspektrum, ein Hüllkurvenspektrum, ein Schmalbandspektrum, frequenzselektive und/oder bauteilspezifische Kennwerte, sind.

6. Verfahren zur Klassifikation eines Wälzlagerzustands, bei dem
- während eines Betriebszustands eines Wälzlagers ein Körperschallzustandssignal des Wälzlagers gemessen wird,
- unter Verwendung des gemessenen Körperschallzustandssignals des Wälzlagers Zustandsmerkmale, welche den Betriebszustand des Wälzlagers beschreiben, bestimmt werden,
- unter Verwendung der Zustandsmerkmale und einer trainierten Abbildungsvorschrift, welche ein Zustandsverhalten eines Wälzlagers beschreibt, der Betriebszustand des Wälzlagers klassifiziert wird.

7. Verfahren zur Klassifikation eines Wälzlagerzustands nach mindestens einem der voranstehenden Ansprüche, **dadurch gekennzeichnet, dass** die Zustandsmerkmale Kennwerte in einem Zeitbereich, insbesondere ein Effektivwert, ein Betragsmaximalwert, eine Hüllkurve, eine Signalleistung, ein Kurtosisfaktor und/oder ein Scheitelfaktor, und/oder in einem Frequenzbereich, insbesondere ein Breitbandspektrum, ein Hüllkurvenspektrum, ein Schmalbandspektrum, frequenzselektive und/oder bauteilspezifische Kennwerte, sind.

8. Verfahren zur Klassifikation eines Wälzlagerzustands nach mindestens einem der voranstehenden Ansprüche, **dadurch gekennzeichnet, dass** die trainierte Abbildungsvorschrift eine Data-Mining-Methode, insbesondere ein statistisches Verfahren, ein Entscheidungsbaum, ein Regressionsbaum, Assoziationsregeln, ein neuronales Netz, ein Neuro-Fuzzy-System, eine Fuzzy-Datenanalyse, ein Lernen probabilistischer Netze, ein Hidden-Markov Modell und/oder ein Bayes-Entscheider, ist.

9. Verfahren zur Klassifikation eines Wälzlagerzustands nach mindestens einem der voranstehenden Ansprüche, **dadurch gekennzeichnet, dass** der klassifizierte Betriebszustand ein unbeschädigtes Wälzlager repräsentiert und/oder dass der klassifizierte Betriebszustand einen Schadenstyp eines Wälzlagers, insbesondere ein Innenring-, Außenring- oder Wälzkörperschaden, und/oder eine Schadensgröße, insbesondere ein beginnendes Lagerpitting oder ein großflächiger Lagerschaden oder eine Schadensgröße zwischen dem beginnenden Lagerpitting und dem großflächigen Lagerschaden, repräsentiert.

10. System zur Klassifikation eines Wälzlagerzustands mit
- einem Aufnehmer zur Aufnahme eines Körperschallzustandssignals eines Wälzlagers und
- einer Einrichtung zur Auswertung des aufgenommenen Körperschallzustandssignals des Wälzlagers auf,
wobei
- der Aufnehmer zur Aufnahme des Körperschallzustandssignals derart eingerichtet ist, dass während eines Betriebszustands des Wälzlagers das Körperschallzustandssignal des Wälzlagers aufnehmbar ist.
- die Einrichtung zur Auswertung des aufgenommenen Körperschallzustandssignals des Wälzlagers derart eingerichtet ist, dass unter Verwendung der Zustandsmerkmale und einer trainierten Abbildungsvorschrift, welche ein Zustandsverhalten eines Wälzlagers beschreibt, der Betriebszustand des Wälzlagers klassifizierbar ist.

11. System zur Klassifikation eines Wälzlagerzustands nach mindestens einem der voranstehenden Ansprüche, **dadurch gekennzeichnet, dass** der Aufnehmer zur Aufnahme des Körperschallzustandssignals ein Körperschallsensor oder ein Schwingungssensor ist.

12. System zur Klassifikation eines Wälzlagerzustands nach mindestens einem der voranstehenden Ansprüche, **dadurch gekennzeichnet, dass** die Einrichtung zur Auswertung des aufgenommenen Körperschallzustandssignals des Wälzlagers ein Computer ist.

13. System zur Klassifikation eines Wälzlagerzustands nach mindestens einem der voranstehenden Ansprüche eingesetzt zu einer Wälzlagerdiagnose, wobei unter Verwendung des klassifizierten Betriebszustand ein Wälzlagerzustand, insbesondere ein Wälzlagerschadenszustand, diagnostiziert wird.

14. System zur Klassifikation eines Wälzlagerzustands nach mindestens einem der voranstehenden Ansprüche, **dadurch gekennzeichnet, dass** der diagnostizierte Wälzlagerzustand ein Schadenstyp eines Wälzlagers, insbesondere ein Innenring-, Außenring- oder Wälzkörperschaden, und/oder eine Schadensgröße eines Wälzlagers, insbesondere ein beginnendes Lagerpitting oder ein großflächiger Lagerschaden oder eine Schadensgröße zwischen dem beginnenden Lagerpitting und dem großflächigen Lagerschaden, ist.
